# FASCICULE DE BREVET EUROPEEN

(11) **EP 1 944 476 B1**
(45) Date de publication et mention de la délivrance du brevet: **09.12.2009**
(21) Numéro de dépôt: 08150059.7
(22) Date de dépôt: 04.01.2008
(51) Int. Cl.: F01L 3/06

(54) **Siège de soupape usiné en deux chanfreins désaxés**
Ventilsitz in Ausführung mit versetzten Fasen
Valve seat machined in two off-centre chamfers

(30) Priorité: 11.01.2007 FR 0752630
(43) Date de publication de la demande: 16.07.2008
(73) Titulaire: PEUGEOT CITROËN AUTOMOBILES SA, 78140 Vélizy Villacoublay (FR)
(72) Inventeur: Lutz, Patrick, 92340, Bourg la Reine (FR); Chemisky, Jean-Pierre, 92400, Courbevoie (FR); Gimbres, David, 94510, La Queue en Brie (FR)
(74) Mandataire: Ménès, Catherine

(56) Documents cités:
- EP-A- 1 475 529
- EP-A1- 0 814 245
- EP-A2- 1 167 700
- DD-A3- 234 998
- FR-A- 2 875 537

## Description

La présente invention concerne un moteur à combustion interne de véhicule automobile, du type comprenant au moins un cylindre et une culasse formant ensemble une chambre de combustion, la culasse comportant un conduit de circulation de gaz débouchant sur une face de sortie de la culasse, le conduit comportant successivement, dans le sens orienté vers la face de sortie, un siège de soupape d'axe (X-X') pour recevoir une soupape puis une embouchure vers la face de sortie, l'embouchure comprenant :
- une première portion de tronc de profil de révolution désaxée par rapport à l'axe (X-X') du siège de soupape, la première portion désaxée s'évasant vers la face de sortie ; et
- une deuxième portion de tronc de profil de révolution, la deuxième portion s'évasant vers la face de sortie.

Le document FR-A-2 875 537 décrit une culasse de moteur à combustion interne de véhicule automobile comportant un conduit d'admission des gaz débouchant sur une face de sortie de la culasse. Le conduit d'admission comporte, dans le sens orienté vers la face de sortie, un siège de soupape d'axe X-X' pour recevoir une soupape puis une embouchure vers la face de sortie. L'embouchure comprend une première portion désaxée de tronc de cône, l'axe de la première portion étant incliné par rapport à l'axe X-X'. L'embouchure comprend également une deuxième portion de tronc de cône d'axe X-X'. Les deux portions sont en vis-à-vis. En effet, une infinité de plans perpendiculaires à l'axe X-X' coupent la première portion et la deuxième portion.

Un autre exemple de ce type de géométrie est illustré par le document DD-A-234 998.

La géométrie de la première portion oriente la circulation des gaz et génère un mouvement tourbillonnaire des gaz dans le cylindre (swirl). La forme de la deuxième portion améliore la perméabilité du conduit d'admission.

Cependant, du fait de la géométrie de l'embouchure, la mouvement tourbillonnaire des gaz dans le cylindre (swirl) n'est pas suffisamment important.

L'invention a pour but d'augmenter le niveau de swirl dans le cylindre sans nuire de façon substantielle à la perméabilité du conduit.

A cet effet, l'invention a pour objet un moteur du type précité, caractérisé en ce que la deuxième portion de tronc de profil de révolution est désaxée par rapport à l'axe (X-X') du siège de soupape, la deuxième portion désaxée étant également désaxée par rapport à l'axe de la première portion désaxée.

Suivant des modes particuliers de réalisation, le moteur comporte l'une ou plusieurs des caractéristiques suivantes, prise(s) isolément ou suivant toutes les combinaisons techniquement possibles :
- ladite première portion désaxée a un axe parallèle à l'axe (X-X') du siège de soupape, l'axe de la première portion désaxée étant espacé de l'axe (X-X') du siège de soupape,(14) suivant un axe d'orientation (Y-Y') perpendiculaire à l'axe (X-X') du siège du soupape et à l'axe de la première portion désaxée, l'axe d'orientation (Y-Y') définissant une direction d'orientation de la première portion désaxée par rapport au siège de soupape (14) ;
- ladite deuxième portion désaxée a un axe parallèle à l'axe (X-X') du siège de soupape, l'axe de la deuxième portion désaxée étant espacé de l'axe (X-X') du siège de soupape (14), suivant un axe d'orientation (Z-Z') perpendiculaire à l'axe (X-X') du siège du soupape et à l'axe de la deuxième portion désaxée, l'axe d'orientation (Z-Z') définissant une direction d'orientation de la deuxième portion désaxée par rapport au siège de soupape ;
- l'axe d'orientation (Y-Y') de la première portion désaxée et l'axe d'orientation (Z-Z') de la deuxième portion désaxée forment entre eux un angle (α) non nul ;
- la première portion désaxée est moins évasée que la deuxième portion désaxée ;
- la première portion désaxée s'étend sur un tour et en ce que la deuxième portion désaxée s'étend sur moins d'un tour;
- l'embouchure comprend également une troisième portion de tronc de profil de révolution, une infinité de plans perpendiculaires à l'axe (X-X') du siège de soupape coupant la troisième portion et au moins l'une des première et deuxième portions ;
- l'embouchure comprend également une quatrième portion de tronc de profil de révolution s'évasant vers la face de sortie, la troisième portion précédant, dans le sens orienté vers la face de sortie, la quatrième portion, la quatrième portion étant plus évasée que la troisième portion, une infinité de plans perpendiculaires à l'axe (X-X') du siège de soupape coupant la quatrième portion et au moins l'une des première et deuxième portions ; et
- la troisième portion est une portion de tronc de cylindre ayant pour axe l'axe (X-X') du siège de soupape.

L'invention a également pour objet un véhicule automobile, caractérisé en ce que qu'il comporte un moteur à combustion interne tel que décrit ci-dessus.

L'invention sera mieux comprise à la lecture de la description qui va suivre, donnée uniquement à titre d'exemple et se référant aux dessins annexés, sur lesquels :
- la figure 1 est une vue schématique partielle d'une section suivant une ligne Z-Z' de la figure 2, d'un cylindre et d'une culasse selon un premier mode de réalisation ;
- la figure 2 est une vue de dessous de la culasse de la figure 1;
- la figure 3 est une vue analogue à la figure 1 de la culasse suivant un mode de réalisation préféré de l'invention ;
- la figure 4 est une vue schématique d'une section d'une culasse illustrant une étape du procédé de fabrication des culasses des figures 1 à 3 ;
- la figure 5 est une vue analogue à la figure 4 d'une autre étape du procédé de fabrication des culasses des figures 1 à 3 ;
- la figure 6 est une vue analogue à celle des figures 4 et 5 illustrant une autre étape du procédé de fabrication des culasses des figures 1 à 3 ;
- la figure 7 est une vue analogue aux figures 4 à 6, illustrant une autre étape du procédé de fabrication de la culasse de la figure 3.

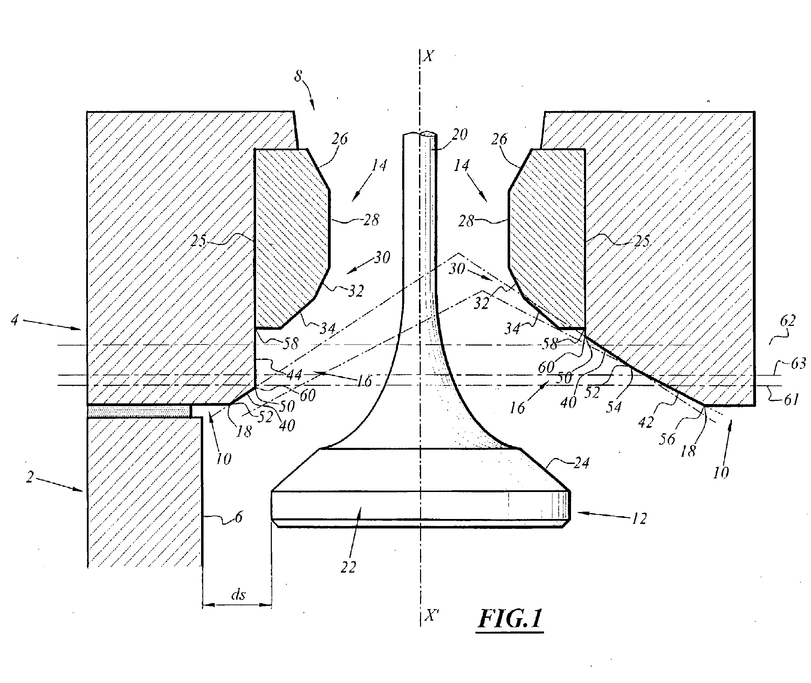

La figure 1 illustre schématiquement une section d'une partie d'un moteur à combustion interne de véhicule automobile. Le moteur comprend un bloc-cylindres 2 et une culasse 4. Le bloc-cylindres 2 comprend par exemple quatre cylindres 6 mais peut comprendre un nombre quelconque de cylindres 6. La culasse 4 forme une chambre de combustion avec chaque cylindre 6.

La culasse 4 comprend par exemple quatre conduits 8 de circulation de gaz vers chaque cylindre 6. Il s'agit par exemple de deux conduits 8 d'admission et de deux conduits 8 d'échappement.

Les conduits 8 débouchent sur une face de sortie 10 de la culasse 4.

Chaque conduit 8 d'admission ou d'échappement est muni d'une soupape 12 d'obturation mobile et comporte, dans le sens vers la face de sortie 10, un siège 14 de soupape d'axe X-X' pour recevoir la soupape 12, puis une embouchure 16 vers la face de sortie 10.

La face de sortie 10 de la culasse 4 est une face plane définissant, avec chaque cylindre 6, la chambre de combustion. Elle comporte, au niveau de chaque embouchure 16, un bord d'embouchure 18 correspondant à une extrémité de sortie de l'embouchure 16.

La soupape 12 est mobile suivant l'axe X-X' du siège de soupape 14. Elle comporte une tige 20 d'axe X-X' reliée à une surface de came (non représentée) de façon connue. Elle comporte également une tête évasée 22 solidaire de la tige 20. La tête 22 de la soupape 12 est propre à assurer, en reposant sur le siège de soupape 14, une obturation étanche du conduit 8. La tête 22 comporte à cet effet une face d'obturation 24 tronconique d'axe X-X'.

La distance minimale « ds » entre la soupape 12 et le cylindre 6 (figure 1) est par exemple comprise entre 0,5 et 2 mm.

Le siège de soupape 14 est par exemple formé par une bague, la bague étant encastrée dans un évidement 25 sensiblement cylindrique du conduit 8. Le siège de soupape 14 peut également être réalisé par usinage de la culasse 4.

Le siège de soupape 14 comprend, dans le sens orienté vers la face de sortie 10, une partie convergente 26 vers la face de sortie 10, une partie à diamètre sensiblement constant 28 et une partie divergente 30 vers la face de sortie 10.

La partie convergente 26 est par exemple formée par un tronc de cône d'axe X-X'. La partie à diamètre constant 28 forme un col du siège de soupape 14, il s'agit par exemple d'un tronc de cylindre d'axe X-X'. La partie divergente 30 comprend par exemple, comme illustré sur la figure 1, deux troncs de cônes supérieur 32 et inférieur 34 d'axe X-X', successifs dans le sens vers la face de sortie 10. Les deux troncs de cône 32, 34 s'évasent vers la face de sortie 10. Le tronc de cône inférieur 34 est, dans l'exemple illustré, plus évasé que le tronc de cône supérieur 32. Lorsque la soupape 12 est fermée, le tronc de cône inférieur 34 est au contact de la face d'obturation 24 de la soupape 12.

Le siège de soupape 14 a ainsi une forme de venturi.

Dans tout ce qui suit, l'axe d'une portion d'un tronc de profil de révolution est considéré comme étant l'axe du profil de révolution. Par exemple, l'axe d'une portion de tronc de cône de révolution est l'axe du cône de révolution. De plus, une portion désaxée par rapport à, par exemple, l'axe X-X', est une portion dont l'axe n'est pas X-X'. Son axe peut, par exemple, être incliné par rapport à l'axe X-X' ou être parallèle à l'axe X-X' tout en étant espacé de l'axe X-X'. De plus, on entend par pente, dans le cas où une génératrice d'un profil de révolution est une droite, l'angle formé entre la génératrice et le plan de la face de sortie 10.

L'embouchure 16 comprend une première 40, une deuxième 42, et une troisième 44 portions de tronc de profil de révolution.

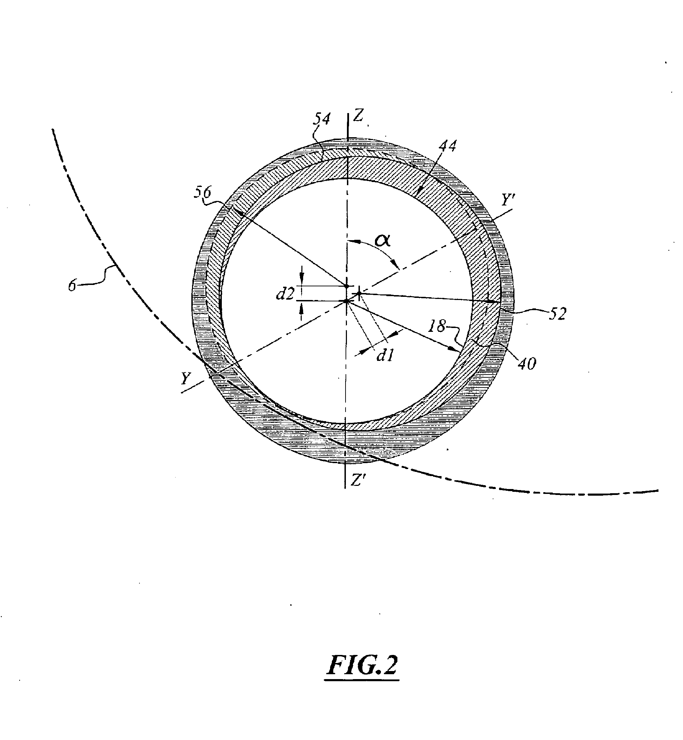

La première portion 40 est désaxée par rapport à l'axe X-X' du siège de soupape 14. L'axe de la première portion désaxée 40 est par exemple parallèle à l'axe X-X' et espacé de l'axe X-X' d'une distance "d1" comprise entre 0,5 et 3 mm, suivant un axe d'orientation Y-Y' perpendiculaire à l'axe X-X' du siège de soupape 14 et à l'axe de la première portion 40. L'axe d'orientation Y-Y' définit ainsi une direction d'orientation de la première portion désaxée 40 par rapport au siège de soupape 14. La figure 2 illustre le désaxage de la première portion 40 suivant la direction Y-Y'.

La première portion désaxée 40 s'évase vers la face de sortie 10. Elle est par exemple une portion de tronc de cône, comme illustré sur la figure 1.

La première portion désaxée 40 s'étend avantageusement sur un tour, comme illustré sur la figure 2. La perméabilité du conduit 8 est ainsi améliorée.

La première portion désaxée 40 comprend un bord supérieur 50 et un bord inférieur 52. Le bord inférieur 52 définit une portion de cercle coïncidant avec une partie du bord d'embouchure 18 de la face de sortie 10.

La deuxième portion 42 de tronc de profil de révolution est également désaxée par rapport à l'axe X-X' du siège de soupape 14. Dans l'exemple illustré sur les figures 1 à 3, l'axe de la deuxième portion désaxée 42 est parallèle à l'axe X-X' et espacé de l'axe X-X' d'une distance "d2" comprise entre 0,5 et 3 mm, suivant un axe d'orientation Z-Z' perpendiculaire à l'axe X-X' du siège de soupape 14 et à l'axe de la deuxième portion désaxée 42. L'axe d'orientation Z-Z' définit ainsi une direction d'orientation de la deuxième portion désaxée 42 par rapport au siège de soupape 14 (voir figure 2).

La deuxième portion désaxée 42 s'évase également vers la face de sortie 10. La perméabilité du conduit 8 est ainsi améliorée. La deuxième portion désaxée 42 est par exemple une portion de tronc de cône, la pente de la deuxième portion 42 étant par exemple différente de la pente de la première portion 40. Cependant, dans une autre réalisation, les pentes des première et deuxième portions 40, 42 sont identiques.

L'axe d'orientation Y-Y' de la première portion 40 et l'axe d'orientation Z-Z' de la deuxième portion 42 forment entre eux un angle α non nul. La distance minimale « ds » entre la soupape 12 et le cylindre 6 est ainsi diminuée.

La deuxième portion désaxée 42 s'étend avantageusement sur moins d'un tour, comme illustré sur les figures 1 à 3. La deuxième portion 42 a ainsi une forme de croissant. La directivité du flux de gaz traversant l'embouchure 16 est ainsi améliorée.

La deuxième portion désaxée 42 comprend un bord supérieur 54 et un bord inférieur 56. Dans les exemples des figures 1 à 3, le bord supérieur 54 coïncide avec une partie du bord inférieur 52 de la première portion 40. Le bord inférieur 56 de la deuxième portion 42 définit une portion de cercle coïncidant avec une partie du bord d'embouchure 18 de la face de sortie 10.

La troisième portion 44 de tronc de profil de révolution a avantageusement pour axe l'axe X-X' du siège de soupape 14.

La troisième portion 44 est avantageusement moins évasée que les première et deuxième portions 40, 42. La distance minimale « ds » entre la soupape 12 et le cylindre 6 est ainsi diminuée. Il s'agit par exemple d'une portion de tronc de cylindre.

La troisième portion 44 s'étend par exemple sur un tour.

Elle comprend un bord supérieur 58 et un bord inférieur 60. Dans l'exemple illustré sur la figure 1, le bord inférieur 60 coïncide avec le bord supérieur 50 de la première portion 40. Le bord supérieur 58 définit un cercle adjacent au siège de soupape 14.

La première portion 40 et la deuxième portion 42 sont en vis-à-vis. En effet, une infinité de plans 61 perpendiculaires à l'axe X-X' coupe la première portion 40 et la deuxième portion 42.

La troisième portion 44 et la première portion 40 sont en vis-à-vis. En effet, une infinité de plans 62 perpendiculaires à l'axe X-X' du siège de soupape coupe la troisième portion 44 et la première portion 40.

De plus, une infinité de plans 63 perpendiculaires à l'axe X-X' coupe les trois portions 40, 42, 44.

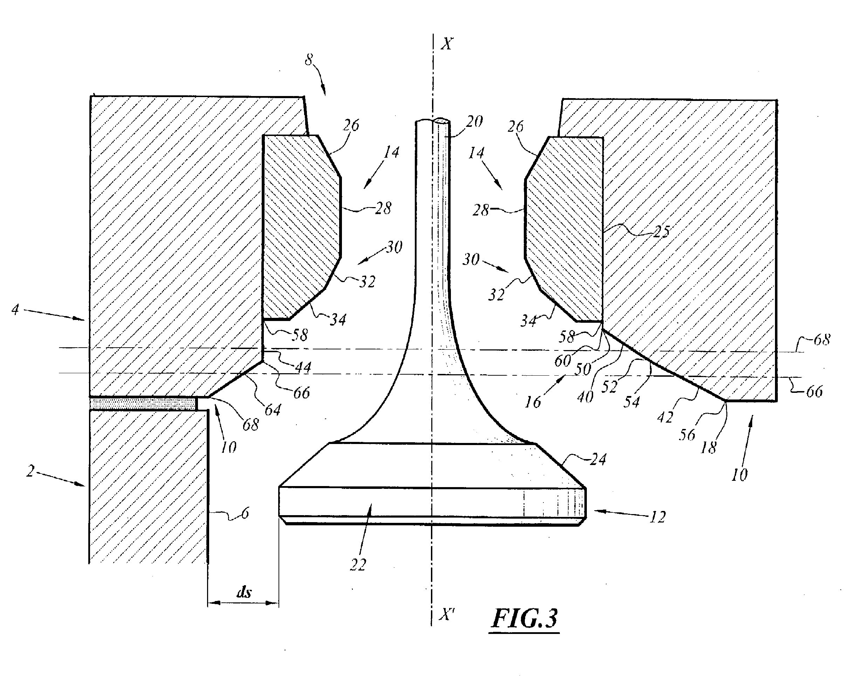

Dans un mode de réalisation préférée illustré sur la figure 3, l'embouchure 16 comprend une quatrième portion 64.

La quatrième portion 64 a avantageusement pour axe l'axe X-X'.

La quatrième portion 64 s'évase vers la face de sortie 10. Elle est plus évasée que la troisième portion 44.

La troisième portion 44 précède, dans le sens orienté vers la face de sortie 10, la quatrième portion 64.

La quatrième portion 64 est par exemple une portion de tronc de cône. Elle s'étend, dans l'exemple illustré à la figure 3, sur moins d'un tour.

La quatrième portion 64 comprend un bord supérieur 66 et un bord inférieur 68. Le bord supérieur 66 coïncide avec une partie du bord inférieur 60 de la troisième portion 44. Le bord inférieur 68 définit une portion de cercle coïncidant avec une partie du bord d'embouchure 18 de la face de sortie 10.

La distance minimale entre le bord inférieur 68 et une projection du cylindre 6 sur le plan de la face de sortie 10 est avantageusement nulle, comme illustré sur la figure 3. La distance minimale « ds » entre la soupape 12 et le cylindre 6 est ainsi réduite.

Une infinité de plans 66 perpendiculaires à l'axe X-X' coupe les première, deuxième et quatrième portions 40, 42, 64. Une infinité de plans 68 perpendiculaires à l'axe X-X' coupe les première et troisième portions 40, 44.

Les dispositions des portions 40, 42, 44, 64 de l'embouchure 16 décrites dans les deux modes de réalisation ci-dessus ne sont pas limitatives. En effet, l'embouchure 16 comprend par exemple un nombre plus important de portions.

Le nombre de conduits 8 n'est pas limitatif. La culasse 4 comprend en effet par exemple un unique conduit 8 d'admission et un unique conduit 8 d'échappement par cylindre 6.

Les figures 3 à 7 illustrent un procédé de fabrication du conduit 8 fournit à titre d'exemple non limitatif.

Le procédé comporte une étape d'insertion de la bague formant siège de soupape 14 dans l'évidement cylindrique 25 du conduit 8, comme illustré sur la figure 2.

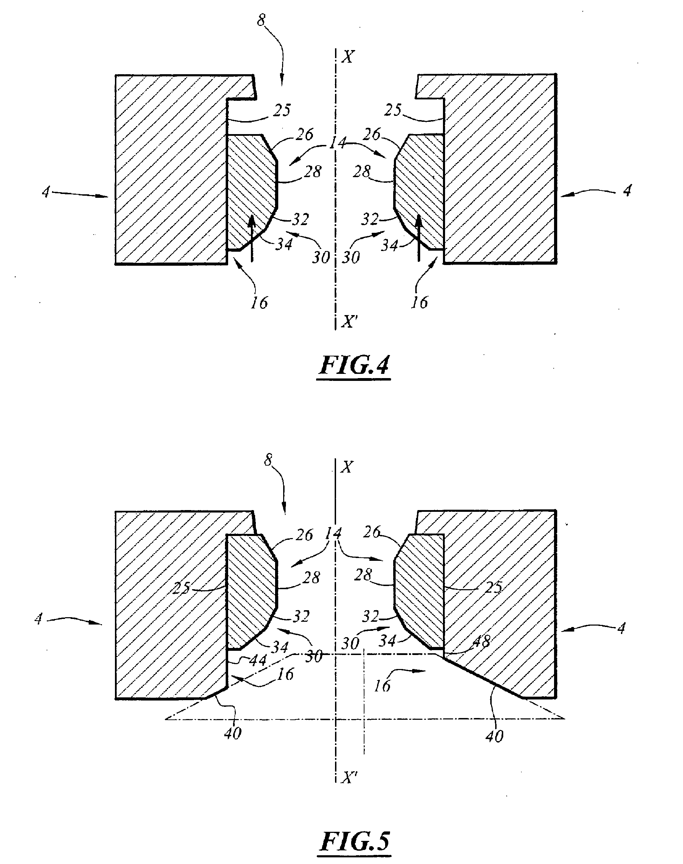

La figure 5 illustre une première étape de fraisage désaxé par rapport à l'axe X-X'. Ce premier fraisage désaxé est par exemple réalisé avec une fraise en tronc de cône.

L'axe du premier fraisage désaxé est parallèle à l'axe X-X' et espacé de la distance d1 de l'axe X-X', suivant la direction d'orientation Y-Y' de la première portion 40. Cependant, l'axe de fraisage peut aussi ne pas être parallèle à l'axe X-X'.

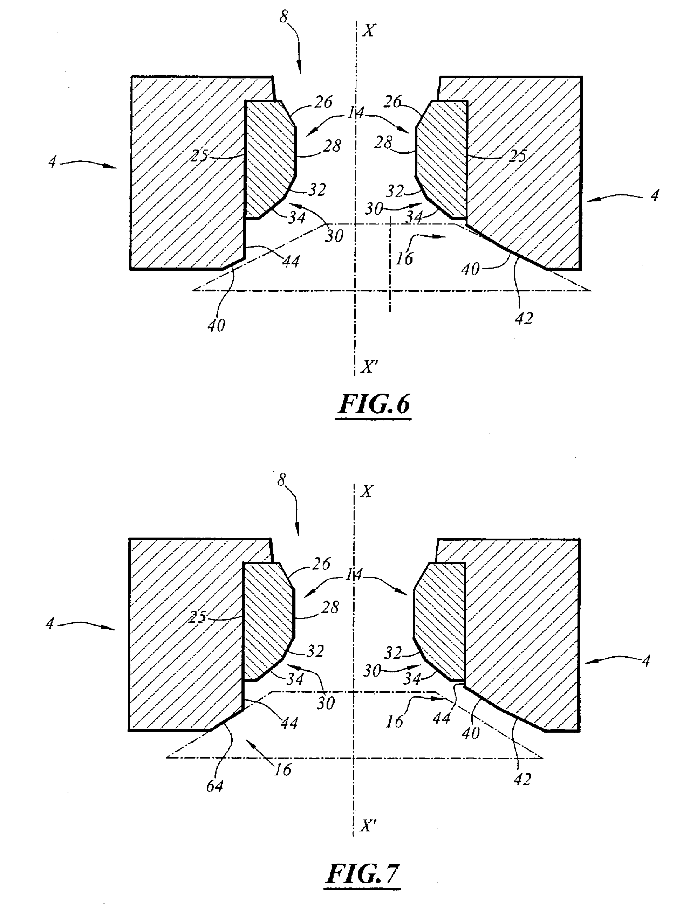

Le procédé comporte également une deuxième étape de fraisage désaxé illustré sur la figure 6. Cette deuxième étape de fraisage désaxé est par exemple réalisée avec une fraise en tronc de cône dont la pente est inférieure à la fraise utilisée pour le premier fraisage désaxé. L'axe de la fraise est parallèle à l'axe X-X' et espacé de la distance d2 par rapport à l'axe X-X', suivant la direction d'orientation Z-Z' de la deuxième portion désaxée 42. De même que pour le premier fraisage, l'axe du deuxième fraisage n'est pas nécessairement parallèle à l'axe X-X'. Le parallèlisme facilite la fabrication.

On notera que le deuxième fraisage peut être réalisé avant ou après le premier fraisage.

Pour obtenir la quatrième portion 64, on réalise une troisième étape de fraisage avec une fraise en tronc de cône dont la pente est égale à la pente de la portion 64. La fraise a pour axe l'axe X-X'.

Avec l'invention, la deuxième portion 42 désaxée contribue à orienter le flux de gaz traversant l'embouchure 16 et permet ainsi d'améliorer le niveau de turbulence des gaz dont le cylindre 6 (swirl). La deuxième portion désaxée assure également une bonne perméabilité du conduit 8.

De plus, la distance minimale "ds" entre la soupape 12 et le cylindre 6 est réduite. En effet, la troisième portion 44 étant moins évasée que les première, deuxième et éventuellement quatrième portions 40, 42, 64, l'axe X-X' du siège de soupape 14 est plus proche de la périphérie du cylindre 6. Ceci permet de rapprocher le conduit 8 de la périphérie du cylindre 6 et d'améliorer encore le niveau de swirl. Si l'invention est appliquée au conduit 8 d'admission et au conduit 8 d'échappement, cela a également pour effet d'augmenter l'épaisseur de matière entre les conduits 8 et/ou de permettre d'augmenter, à diamètre de cylindre 6 constant, le diamètre des conduits 8.

La quatrième portion 64 permet d'améliorer encore la perméabilité du conduit 8, sans augmenter la distance minimale "ds" entre la soupape 12 et le cylindre 6, et sans diminuer de façon significative le niveau de swirl dans le cylindre 6.

## Revendications

1. Moteur à combustion interne de véhicule automobile, du type comprenant au moins un cylindre (6) et une culasse (4) formant ensemble une chambre de combustion, la culasse (4) comportant un conduit (8) de circulation de gaz débouchant sur une face (10) de sortie de la culasse (4), le conduit (8) comportant successivement, dans le sens orienté vers la face de sortie (10), un siège (14) de soupape d'axe (X-X') pour recevoir une soupape (12) puis une embouchure (16) vers la face de sortie (10), l'embouchure (16) comprenant :
- une première portion (40) de tronc de profil de révolution désaxée par rapport à l'axe (X-X') du siège de soupape (14), la première portion désaxée (40) s'évasant vers la face de sortie (10) ; et
- une deuxième portion (42) de tronc de profil de révolution, la deuxième portion (42) s'évasant vers la face de sortie (10) ;
**caractérisé en ce que** la deuxième portion (42) de tronc de profil de révolution est désaxée par rapport à l'axe (X-X') du siège de soupape (14), la deuxième portion désaxée (42) étant également désaxée par rapport à l'axe de la première portion désaxée (40).

2. Moteur selon la revendication 1, **caractérisé en ce que** ladite première portion désaxée (40) a un axe parallèle à l'axe (X-X') du siège de soupape (14), l'axe de la première portion désaxée (40) étant espacé de l'axe (X-X') du siège de soupape (14) d'une distance (d1) comprise entre 0 et 3 mm par exemple, suivant un axe d'orientation (Y-Y') perpendiculaire à l'axe (X-X') du siège du soupape (14) et à l'axe de la première portion désaxée (40), l'axe d'orientation (Y-Y') définissant une direction d'orientation de la première portion désaxée (40) par rapport au siège de soupape (14).

3. Moteur selon la revendication 1 ou 2, **caractérisé en ce que** ladite deuxième portion désaxée (42) a un axe parallèle à l'axe (X-X') du siège de soupape (14), l'axe de la deuxième portion désaxée (42) étant espacé de l'axe (X-X') du siège de soupape (14) d'une distance (d2) comprise entre 0 et 3 mm, suivant un axe d'orientation (Z-Z') perpendiculaire à l'axe (X-X') du siège du soupape (14) et à l'axe de la deuxième portion désaxée (42), l'axe d'orientation (Z-Z') définissant une direction d'orientation de la deuxième portion désaxée (42) par rapport au siège de soupape (14).

4. Moteur selon la revendication 3, **caractérisé en ce que** l'axe d'orientation (Y-Y') de la première portion désaxée (40) et l'axe d'orientation (Z-Z') de la deuxième portion désaxée (42) forment entre eux un angle (α) ≥0°.

5. Moteur selon l'une quelconque des revendications précédentes, **caractérisé en ce que** la première portion désaxée (40) est moins évasée que la deuxième portion désaxée (42).

6. Moteur selon l'une quelconque des revendications précédentes, **caractérisé en ce que** la première portion désaxée (40) s'étend sur un tour et **en ce que** la deuxième portion désaxée (42) s'étend sur moins d'un tour.

7. Moteur selon l'une quelconque des revendications précédentes, **caractérisé en ce que** l'embouchure (16) comprend également une troisième portion (44) de tronc de profil de révolution, une infinité de plans (61, 62, 63) perpendiculaires à l'axe (X-X') du siège de soupape (14) coupant la troisième portion (44) et au moins l'une des première et deuxième portions (40, 42).

8. Moteur selon la revendication 7, **caractérisé en ce que** l'embouchure (16) comprend également une quatrième portion (64) de tronc de profil de révolution s'évasant vers la face de sortie (10), la troisième portion précédant, dans le sens orienté vers la face de sortie (10), la quatrième portion, la quatrième portion étant plus évasée que la troisième portion, une infinité de plans (66) perpendiculaires à l'axe (X-X') du siège de soupape (14) coupant la quatrième portion et au moins l'une des première et deuxième portions (40, 42).

9. Moteur selon la revendication 8, **caractérisé en ce que** la troisième portion (44) est une portion de tronc de cylindre ayant pour axe l'axe (X-X') du siège de soupape (14).

10. Véhicule automobile, **caractérisé en ce qu'**il comporte un moteur à combustion interne selon l'une quelconque des revendications précédentes.

## Claims

1. Motor vehicle internal combustion engine of the type comprising at least one cylinder (6) and one cylinder head (4) together forming combustion chamber, the cylinder head (4) comprising a duct (8) for the circulation of gas opening onto an outlet face (10) of the cylinder head (4), the duct (8) comprising, in succession, in the direction towards the outlet face (10) a valve seat (14) of axis (X-X') to receive a valve (12), then a mouth (16) towards the outlet face (10), the mouth (16) comprising:
- a first frustum portion (40) the profile of which exhibits symmetry of revolution, which is off-axis with respect to the axis (X-X') of the valve seat (14), the first off-axis portion (40) widening towards the outlet face (10); and
- a second frustum portion (42) the profile of which exhibits symmetry of revolution, the second portion (42) widening towards the outlet face (10);
**characterized in that** the second frustum portion (42) the profile of which exhibits symmetry of revolution is off-axis with respect to the axis (X-X') of the valve seat (14), the second off-axis portion (42) also being off axis with respect to the axis of the first off-axis portion (40).

2. Engine according to Claim 1, **characterized in that** the said first off-axis portion (40) has an axis parallel to the axis (X-X') of the valve seat (14), the axis of the first off-axis portion (40) being spaced away from the axis (X-X') of the valve seat (14) by a distance (d1) comprised between 0 and 3 mm for example, along an axis or orientation (Y-Y') perpendicular to the axis (X-X') of the valve seat (14) and to the axis of the first off-axis portion (40), the axis of orientation (Y-Y') defining a direction orientation of the first off-axis portion (40) with respect to the valve seat (14).

3. Engine according to Claim 1 or 2, **characterized in that** the said second off-axis portion (42) has an axis parallel to the axis (X-X') of the valve seat (14), the axis of the second off-axis portion (42) being spaced away from the axis (X-X') of the valve seat (14) by a distance (d2) comprised between 0 and 3 mm along an axis of orientation (Z-Z') perpendicular to the axis (X-X') of the valve seat (14) and to the axis of the second off-axis portion (42), the axis of orientation (Z-Z') defining a direction of orientation of the second off-axis portion (42) with respect to the valve seat (14).

4. An engine according to Claim 3, **characterized in that** the axis of orientation (Y-Y') of the first off-axis portion (40) of the axis of orientation (Z-Z') of the second off-axis portion (42) between them form an angle (α) ≥ 0°.

5. Engine according to any one of the preceding claims, **characterized in that** the first off-axis portion (40) does not widen as much as the second off-axis portion (42).

6. Engine according to any one of the preceding claims, **characterized in that** the first off-axis portion (40) extends over one revolution **in that** the second off-axis portion (42) extends over less than one revolution.

7. Engine according to any one of the preceding claims, **characterized in that** the mouth (16) also comprises a third frustum portion (44) the profile of which exhibits symmetry of revolution, and infinity of planes (61, 62, 63) perpendicular to the axis (X-X') of the valve seat (14) intersecting the third portion (44) and at least one of the first and second portions (40, 42).

8. Engine according to Claim 7, **characterized in that** the mouth (16) also comprises a fourth frustum portion (64) the profile of which exhibits symmetry of revolution, widening towards the outlet face (10), the third portion preceding, in the direction towards the outlet face (10), the fourth portion, the fourth portion being more widened than the third portion, an infinity of planes (66) perpendicular to the axis (X-X') of the valve seat (14) inserting the fourth portion and at least one of the first and second portions (40, 41).

9. Engine according to Claim 8, **characterized in that** the third portion (44) is a portion of a cylinder frustum its axis being the axis (X-X') of the valve seat (14).

10. Motor vehicle, **characterized in that** it comprises an internal combustion engine according to any one of the preceding claims.

## Patentansprüche

1. Kraftfahrzeug-Verbrennungsmotor von dem Typ, der mindestens einen Zylinder (6) und einen Zylinderkopf (4) aufweist, die zusammen einen Brennraum bilden, wobei der Zylinderkopf (4) eine Gasströmungskanal (8) aufweist, der an einer Ausgangsseite (10) des Zylinderkopfs (4) mündet, wobei der Kanal (8) nacheinander in Richtung der Ausgangsseite (10) einen Ventilsitz (14) mit einer Achse (X-X'), um ein Ventil (12) aufzunehmen, und dann eine Mündung (16) zur Ausgangsseite (10) aufweist, wobei die Mündung (16) enthält:
- einen ersten Stumpfabschnitt (40) mit drehsymmetrischem Profil, der bezüglich der Achse (X-X') des Ventilsitzes (14) versetzt ist, wobei der erste versetzte Abschnitt (40) sich zur Ausgangsseite (10) hin ausweitet; und
- einen zweiten Stumpfabschnitt (42) mit drehsymmetrischem Profil, wobei der zweite Abschnitt (42) sich zur Ausgangsseite (10) hin ausweitet;
**dadurch gekennzeichnet, dass** der zweite Stumpfabschnitt (42) mit drehsymmetrischem Profil bezüglich der Achse (X-X') des Ventilsitzes (14) versetzt ist, wobei der zweite versetzte Abschnitt (42) ebenfalls bezüglich der Achse des ersten versetzten Abschnitts (40) versetzt ist.

2. Motor nach Anspruch 1, **dadurch gekennzeichnet, dass** der erste versetzte Abschnitt (40) eine Achse parallel zur Achse (X-X') des Ventilsitzes (14) hat, wobei die Achse des ersten versetzten Abschnitts (40) einen Abstand (d1) zur Achse (X-X') des Ventilsitzes (14) hat, der zum Beispiel zwischen 0 und 3 mm liegt, gemäß einer Ausrichtungsachse (Y-Y') lotrecht zur Achse (X-X') des Ventilsitzes (14) und zur Achse des ersten versetzten Abschnitts (40), wobei die Ausrichtungsachse (Y-Y') eine Ausrichtungsrichtung des ersten versetzten Abschnitts (40) bezüglich des Ventilsitzes (14) definiert.

3. Motor nach Anspruch 1 oder 2, **dadurch gekennzeichnet, dass** der zweite versetzte Abschnitt (42) eine Achse parallel zur Achse (X-X') des Ventilsitzes (14) hat, wobei die Achse des zweiten versetzten Abschnitts (42) einen Abstand (d2) zur Achse (X-X') des Ventilsitzes (14) hat, der zwischen 0 und 3 mm liegt, gemäß einer Ausrichtungsachse (Z-Z') lotrecht zur Achse (X-X') des Ventilsitzes (14) und zur Achse des zweiten versetzten Abschnitts (42), wobei die Ausrichtungsachse (Z-Z') eine Ausrichtungsrichtung des zweiten versetzten Abschnitts (42) bezüglich des Ventilsitzes (14) definiert.

4. Motor nach Anspruch 3, **dadurch gekennzeichnet, dass** die Ausrichtungsachse (Y-Y') des ersten versetzten Abschnitts (40) und die Ausrichtungsachse (Z-Z') des zweiten versetzten Abschnitts (42) miteinander einen Winkel (α) ≥ 0 bilden.

5. Motor nach einem der vorhergehenden Ansprüche, **dadurch gekennzeichnet, dass** der erste versetzte Abschnitt (40) weniger ausgeweitet ist als der zweite versetzte Abschnitt (42).

6. Motor nach einem der vorhergehenden Ansprüche, **dadurch gekennzeichnet, dass** der erste versetzte Abschnitt (40) sich über eine Umdrehung erstreckt, und dass der zweite versetzte Abschnitt (42) sich über weniger als eine Umdrehung erstreckt.

7. Motor nach einem der vorhergehenden Ansprüche, **dadurch gekennzeichnet, dass** die Mündung (16) ebenfalls einen dritten Stumpfabschnitt (44) mit drehsymmetrischem Profil aufweist, wobei unendliche viele Ebenen (61, 62, 63) lotrecht zur Achse (X-X') des Ventilsitzes (14) den dritten Abschnitt (44) und mindestens einen der ersten und zweiten Abschnitte (40, 42) schneiden.

8. Motor nach Anspruch 7, **dadurch gekennzeichnet, dass** die Mündung (16) ebenfalls einen vierten Stumpfabschnitt (64) mit drehsymmetrischem Profil aufweist, der sich zur Ausgangsseite (10) hin ausweitet, wobei der dritte Abschnitt in der zur Ausgangsseite (10) ausgerichteten Richtung vor dem vierten Abschnitt liegt, wobei der vierte Abschnitt stärker ausgeweitet ist als der dritte Abschnitt, wobei unendlich viele Ebenen (66) lotrecht zur Achse (X-X') des Ventilsitzes (14) den vierten Abschnitt und mindestens einen der ersten und zweiten Abschnitte (40, 42) schneiden.

9. Motor nach Anspruch 8, **dadurch gekennzeichnet, dass** der dritte Abschnitt (44) ein Zylinderstumpfabschnitt ist, der als Achse die Achse (X-X') des Ventilsitzes hat (14).

10. Kraftfahrzeug, **dadurch gekennzeichnet, dass** es einen Verbrennungsmotor nach einem der vorhergehenden Ansprüche aufweist.
